# EUROPEAN PATENT APPLICATION

(11) **EP 4 443 621 A2**
(43) Date of publication of application: **09.10.2024**
(21) Application number: 24159595.8
(22) Date of filing: 26.02.2024
(51) Int. Cl.: H01M 50/209, H01M 50/293

(54) **RECHARGEABLE BATTERY MODULE**

(30) Priority: 03.04.2023 KR 20230043703
(71) Applicant: Samsung SDI Co., Ltd., Yongin-si, Gyeonggi-do 17084 (KR)
(72) Inventor: WON, Hee Youn, Yongin-si 17084 (KR)
(74) Representative: Marks & Clerk LLP

(57) **Abstract**

An embodiment provides a rechargeable battery module, including: a plurality of unit cells disposed in a first direction; a pair of end plates that are disposed at both end portions of the first direction and support the unit cells; a pair of side plates that support the unit cells at both end portions of a second direction crossing the first direction and include a flange portion curved and extended in the second direction; and a side insulation disposed between the unit cells and the side plates, wherein the side insulation includes a first insulating portion disposed between the flange portion and the unit cells.

## Description

### BACKGROUND

### (a) Field

The present disclosure relates to a rechargeable battery module.

### (b) Description of the Related Art

A rechargeable battery is a battery that is repeatedly charged and discharged.

A conventional rechargeable battery module includes a plurality of unit cells arranged in one direction, an end plate disposed at both ends in one direction, a side plate disposed at both ends in the other direction, and a side insulation disposed between the unit cells and the side plate to be adhered to the side plate.

However, the conventional rechargeable battery module has a problem in that a portion of the side insulation is separated from the side plate.

### SUMMARY

An embodiment is to provide a rechargeable battery module including a side insulation that is suppressed to be spaced apart from a flange portion of a side plate supporting a plurality of unit cells.

In addition, another embodiment is to provide a rechargeable battery module including a side insulation in which a double structure in which an increase in thickness is minimized is applied to a flange portion of the side plate supporting a plurality of unit cells to improve insulation reliability between the unit cells and the side plate and to suppress an increase in thickness of an entire module.

An embodiment provides a rechargeable battery module, including: a plurality of unit cells disposed in a first direction; a pair of end plates that are disposed at both end portions of the first direction and support the unit cells; a pair of side plates that support the unit cells at both end portions of a second direction crossing the first direction and include a flange portion curved and extended in the second direction; and a side insulation disposed between the unit cells and the side plates, wherein the side insulation includes a first insulating portion disposed between the flange portion and the unit cells.

The flange portion may cover the unit cells in a third direction crossing the first direction and the second direction, and the first insulating portion may be disposed between the flange portion and the unit cells in the third direction.

The first insulating portion may include a plurality of first through-holes exposing the flange portion in the third direction.

Each of the first through-holes may correspond to each of the unit cells.

The first insulating portion may further include a folding portion that is folded from an end portion of the second direction to cover the first through-holes in the third direction.

The folding portion may be disposed between the first through-holes and the unit cells.

The first insulating portion may further include a first tape disposed between the folding portion and the first through-holes.

The first through-holes may be disposed to be spaced apart from each other in the first direction, and the first tape may extend in the first direction and may be adhered to the flange portion through the first through-holes.

The first tape may adhere the folding portion and the flange portion through the first through-holes.

One of the side plates may further include a side wall portion that is curved and extended in the third direction from the flange portion to cover the unit cells in the second direction.

The side wall portion may include a plurality of second through-holes, and the plurality of second through-holes may expose the side insulation.

The side insulation may further include a second insulating portion that is curved and extended in the third direction from the first insulating portion to be disposed between the unit cells and the side wall portion.

The second insulating portion may include a second tape disposed between the second insulating portion and the side wall portion.

The second tape may adhere an end portion of the third direction of the second insulating portion and the side wall portion.

The rechargeable battery module may further include a top cover connected to the end plates and the side plates to cover the unit cells in the third direction crossing the first direction and the second direction.

The rechargeable battery module may further include a bus bar disposed between the unit cells and the top cover and connected to terminals of the unit cells.

The rechargeable battery module may further include a controller disposed between the top cover and the bus bar and connected to the bus bar.

At least some of the above and other features of the invention are set out in the claims.

According to the embodiment, it is possible to provide a rechargeable battery module including a side insulation that is suppressed to be spaced apart from a flange portion of a side plate supporting a plurality of unit cells.

In addition, according to the embodiment, it is possible to provide a rechargeable battery module including a side insulation in which a double structure in which an increase in thickness is minimized is applied to a flange portion of the side plate supporting a plurality of unit cells to improve insulation reliability between the unit cells and the side plate and to suppress an increase in thickness of an entire module.

### BRIEF DESCRIPTION OF THE DRAWINGS

FIG. 1 illustrates a perspective view of a rechargeable battery module according to an embodiment.
FIG. 2 illustrates an exploded perspective view of a rechargeable battery module according to an embodiment.
FIG. 3 illustrates a cross-sectional view taken along line III-III of FIG. 1.
FIG. 4 illustrates adhering of a side insulation of a rechargeable battery module to a side plate according to an embodiment.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

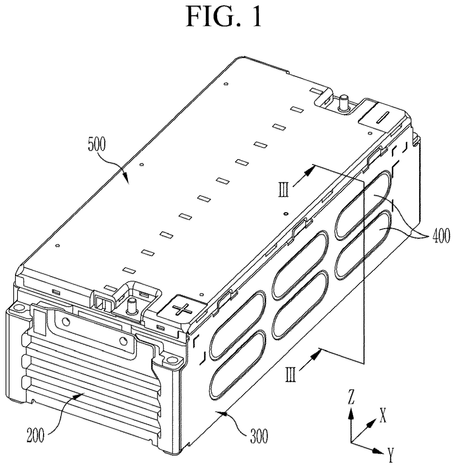

Hereinafter, a rechargeable battery module according to an embodiment will be described with reference to FIG. 1 to FIG. 4.

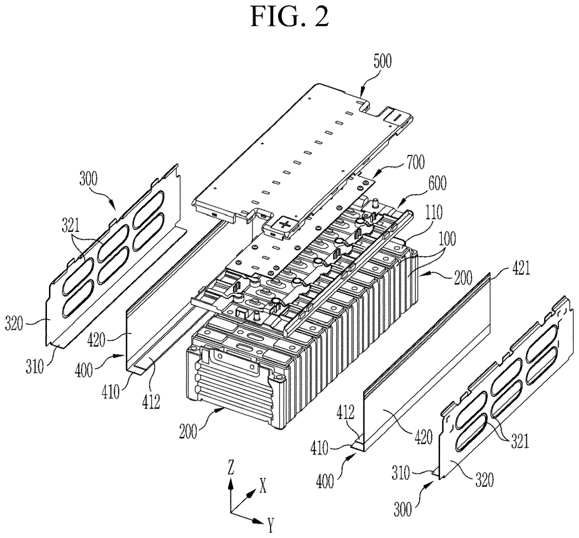

FIG. 1 illustrates a perspective view of a rechargeable battery module according to an embodiment. FIG. 2 illustrates an exploded perspective view of a rechargeable battery module according to an embodiment.

Referring to FIG. 1 and FIG. 2, a rechargeable battery module according to an embodiment includes a plurality of unit cells 100, a pair of end plates 200, a pair of side plates 300, a pair of side insulations 400, a top cover 500, a bus bar 600, and a controller 700.

The plurality of unit cells 100 are disposed in a first direction (X) to be electrically connected to each other. Each of the plurality of unit cells 100 includes various known rechargeable batteries that may be repeatedly charged and discharged. For example, each of the plurality of unit cells 100 includes a lithium ion battery, but is not limited thereto, and may include a lithium polymer battery and the like.

Here, the first direction (X), a second direction (Y), and a third direction (Z) means directions that cross each other, and the directions that cross each other may mean directions that are perpendicular to each other, but are not limited thereto. For example, the second direction (Y) may cross the first direction (X), and the third direction (Z) may cross the first direction (X) and the second direction (Y).

Each of the plurality of unit cells 100 includes a terminal 110. The terminal 110 of each of the plurality of unit cells 100 is disposed at a long side of the unit cell 100, and the plurality of terminals 110 of the plurality of unit cells 100 are electrically connected to each other by the busbar 600. The terminal 110 may have various known terminal structures.

The pair of end plates 200 are disposed at both ends in the first direction (X), and support the plurality of unit cells 100. The end plates 200 are provided as a pair and are disposed at both ends in the first direction (X) to support an outermost unit cell 100 among the plurality of unit cells 100. The end plate 200 includes metal such as stainless steel and aluminium, but is not limited thereto. An insulating material is disposed between the end plate 200 and the plurality of unit cells 100, and the end plate 200 is insulated from the plurality of unit cells 100.

The pair of side plates 300 support the plurality of unit cells 100 at both ends of the second direction (Y) crossing the first direction (X). The pair of side plates 300 may be connected to the pair of end plates 200 at both ends of the second direction (Y) to be spaced apart from the plurality of unit cells 100 at predetermined intervals, but are not limited thereto. The pair of side plates 300 are connected to the pair of end plates 200 to accommodate and support the plurality of unit cells 100. The bus bar 600 and the controller 700 are disposed above the plurality of unit cells 100 accommodated in an inner space set by the pair of end plates 200 and the pair of side plates 300 connected to each other, and the top cover 500 connected to the pair of end plates 200 and the pair of side plates 300 is disposed on the controller 700. The side plate 300 includes metal such as stainless steel and aluminium, but is not limited thereto.

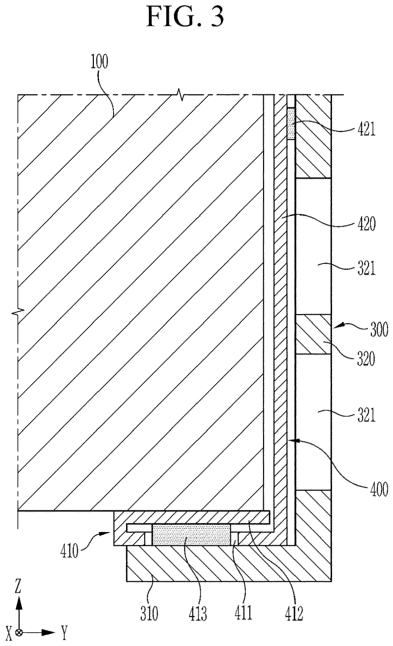

FIG. 3 illustrates a cross-sectional view taken along line III-III of FIG. 1. FIG. 3 illustrates a cross-sectional view of a portion in which the side plate 300 and the side insulation 400 are disposed in the rechargeable battery module.

Referring to FIG. 3 and FIG. 2, one of the pair of side plates 300 includes a flange portion 310 and a side wall portion 320.

The flange portion 310 is bent or curved and extended in the second direction (Y) from the side wall portion 320 to support the plurality of unit cells 100 in the third direction (Z). The flange portion 310 covers some of the plurality of unit cells 100 in the third direction (Z). The flange portion 310 extends along the first direction (X) to support the plurality of unit cells 100 disposed along the first direction (X).

The side wall portion 320 is bent or curved and extends from the flange portion 310 in the third direction (Z) to cover the plurality of unit cells 100 in the second direction (Y). The side wall portion 320 is spaced apart from the plurality of unit cells 100 at a predetermined distance. The side wall portion 320 includes a plurality of second through-holes 321, and the plurality of second through-holes 321 exposes the side insulation 400 disposed between the plurality of unit cells 100 and the side plate 300.

Between each of the pair of side plates 300 including the side wall portion 320 and the flange portion 310 and the plurality of unit cells 100, each of the pair of side insulation 400 as an insulating member is disposed.

The pair of side insulations 400 are respectively disposed between the plurality of unit cells 100 and the pair of side plates 300. The side insulation 400 is disposed as an insulating member between the plurality of unit cells 100 and the side plate 300.

The side insulation 400 includes a first insulating portion 410 and a second insulating portion 420.

The first insulating portion 410 is disposed between the flange portion 310 of the side plate 300 and the plurality of unit cells 100. The first insulating portion 410 is disposed between the flange portion 310 and the plurality of unit cells 100 in the third direction (Z). The first insulating portion 410 extends in the first direction (X) along an extending direction of the flange portion 310 of the side plate 300. The first insulating portion 410 has a double structure in which an increase in thickness in the third direction (Z) is minimized, thereby improving insulation reliability between the plurality of unit cells 100 and the side plate 300.

The first insulating portion 410 includes a plurality of first through-holes 411, a folding portion 412, and a first tape 413.

The plurality of first through-holes 411 are disposed to be spaced apart from each other along the first direction (X), which is an extension direction of the first insulating portion 410. The plurality of first through-holes 411 exposes the flange portion 310 in the third direction (Z). Each of the plurality of first through-holes 411 is disposed to correspond to each of the plurality of unit cells 100. Each of the plurality of first through-holes 411 overlaps each of the plurality of unit cells 100 in the third direction (Z).

The folding portion 412 is folded from an end portion of the first insulating portion 410 in the second direction (Y) to cover the first through-holes 411 in the third direction (Z). The folding portion 412 contacts the plurality of unit cells 100. The folding portion 412 is disposed between the plurality of first through-holes 411 and the plurality of unit cells 100. The folding portion 412 is adhered to the flange portion 310 of the side plate 300 by the first tape 413 penetrating the plurality of first through-holes 411.

The first tape 413 is disposed between the folding portion 412 and the plurality of first through-holes 411. The first tape 413 may be a double-sided adhesive tape that adheres between the flange portion 310 and the folding portion 412. The first tape 413 extends in the first direction (X), and is adhered to the flange portion 310 via the plurality of first through-holes 411 that are spaced apart from each other in the first direction (X). The first tape 413 directly adheres between the folding portion 412 and the flange portion 310 through the plurality of first through-holes 411.

The second insulating portion 420 is bent or curved and extended from the first insulating portion 410 in the third direction (Z). The second insulating portion 420 is disposed between the plurality of unit cells 100 and the side wall portion 320 of the side plate 300 to insulate the plurality of unit cells 100 and the side wall portion 320 of the side plate 300. The second insulating portion 420 may be exposed through the second through-holes 321 of the side wall portion 320 of the side plate 300, but is not limited thereto.

The second insulating portion 420 includes a second tape 421 disposed between the second insulating portion 420 and the side wall portion 320.

The second tape 421 is disposed between the second insulating portion 420 and the side wall portion 320. The second tape 421 may be a double-sided adhesive tape that adheres between the second insulating portion 420 and the side wall portion 320. The second tape 421 extends from the end portion of the second insulating portion 420 in the third direction (Z) in the first direction (X). The second tape 421 directly adheres the end of the second insulating portion 420 in the third direction (Z) and the side wall portion 320.

As described above, the side insulation 400 includes the first insulating portion 410 disposed between the plurality of unit cells 100 and the flange portion 310, such that a short circuit between the flange portion 310 of the side plate 300 supporting the plurality of unit cells 100 and the unit cells 100 is prevented.

In addition, the folding portion 412 of the first insulating portion 410 of the side insulation 400 is adhered to the flange portion 310 of the side plate 300 by the first tape 413 penetrating the plurality of first through holes 411, so that the separation of the first insulating portion 410 of the side insulation 400 from the flange portion 310 of the side plate 300 supporting the plurality of unit cells 100 is suppressed.

In addition, the folding portion 412 of the first insulating portion 410 of the side insulation 400 in direct contact with the plurality of unit cells 100 is adhered to the flange portion 310 of the side plate 300 by the first tape 413 passing through each of the plurality of first through holes 411 corresponding to each of the plurality of unit cells 100, so that since the first insulating portion 410 has a double structure in which the thickness increase is minimized in the third direction (Z), insulation reliability between the plurality of unit cells 100 and the side plate 300 is improved, and at the same time, an increase in the thickness of the entire rechargeable battery module due to the double structure is suppressed.

The aforementioned side insulation 400 may be adhered to the side plate 300 to form a rechargeable battery module.

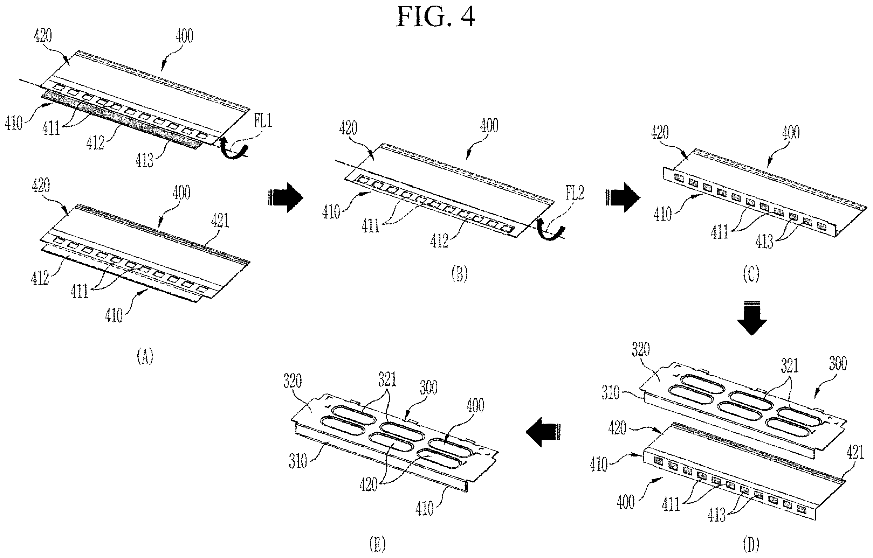

FIG. 4 illustrates adhering of a side insulation of a rechargeable battery module to a side plate according to an embodiment. An upper drawing of FIG. 4 (A) illustrates a front surface of the side insulation 400 facing the plurality of unit cells, and a lower drawing thereof illustrates a rear surface of the side insulation 400 facing the side plate.

As an example of adhering the side insulation to the side plate, referring to FIG. 4 (A), the first tape 413 is in a state of being adhered to the folding portion 412, and the folding portion 412 is folded into the first insulating portion 410 along a folding line FL1 disposed between the plurality of first through-holes 411 and the folding portion 412. In this case, the first tape 413 is exposed by the plurality of first through-holes 411.

Referring to FIG. 4 (B) and FIG. 4 (C), the first insulating portion 410 is folded along a second folding line FL2 disposed between the first insulating portion 410 and the second insulating portion 420 to be bent or curved and extended from the second insulating portion 420.

Referring to FIG. 4 (D) and FIG. (E), the first tape 413 exposed by the plurality of first through-holes 411 of the first insulating portion 410 passes through the plurality of first through-holes 411 to be adhered to the flange portion 310 of the side plate 300, and the second tape 421 of the second insulating portion 420 is adhered to the side wall portion 320 of the side plate 300 so that the side insulation 400 is adhered to the side plate 300.

Referring to FIG. 1 and FIG. 2, the top cover 500 is connected to the end plates 200 and the side plates 300 to cover the unit cells 100 in the third direction (Z) crossing the first direction (X) and the second direction (Y). The top cover 500 may have various known structures.

The bus bar 600 is disposed between the unit cells 100 and the top cover 500. The bus bar 600 is connected to the terminals 110 of the unit cells 100. The bus bar 600 has an assembly form, but is not limited thereto, and may have various known structures.

The controller 700 is disposed between the top cover 500 and the bus bar 600. The controller 700 is connected to the bus bar 600, and may control the plurality of unit cells 100 or monitor the state of the unit cells 100. The controller 700 may include various known rechargeable battery control elements.

As described above, in the rechargeable battery module according to the embodiment, the side insulation 400 includes the first insulating portion 410 disposed between the plurality of unit cells 100 and the flange portion 310, so that a short circuit between the flange portion 310 of the side plate 300 supporting the plurality of unit cells 100 and the unit cells 100 is prevented.

In addition, in the rechargeable battery module according to the embodiment, the folding portion 412 of the first insulating portion 410 of the side insulation 400 is adhered to the flange portion 310 of the side plate 300 by the first tape 413 penetrating the plurality of first through holes 411, so that the separation of the first insulating portion 410 of the side insulation 400 from the flange portion 310 of the side plate 300 supporting the plurality of unit cells 100 is suppressed.

In addition, in the rechargeable battery module according to the embodiment, the folding portion 412 of the first insulating portion 410 of the side insulation 400 in direct contact with the plurality of unit cells 100 is adhered to the flange portion 310 of the side plate 300 by the first tape 413 passing through each of the plurality of first through holes 411 corresponding to each of the plurality of unit cells 100, so that since the first insulating portion 410 has a double structure in which the thickness increase is minimized in the third direction (Z), insulation reliability between the plurality of unit cells 100 and the side plate 300 is improved, and at the same time, an increase in the thickness of the entire rechargeable battery module due to the double structure is suppressed.

For example, the rechargeable battery module including the side insulation 400 in which the separation of the first insulating portion 410 from the flange portion 310 of the side plate 300 supporting the plurality of unit cells 100 is suppressed is provided.

In addition, a rechargeable battery module including the side insulation 400 in which the first insulating portion 410 with a double structure in which the increase in thickness is minimized in the flange portion 310 of the side plate 300 supporting the plurality of unit cells 100 is applied to improve the insulation reliability between the unit cells 100 and the side plate 300 and to suppress the increase in thickness of the entire module, is provided.

While the embodiment of the present disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

100: unit cell, 200: end plate, 300: side plate, 400: side insulation, 410: first insulating portion, 420: second insulating portion

## Claims

1. A rechargeable battery module, comprising:
a plurality of unit cells disposed in a first direction;
a pair of end plates that are disposed at both end portions of the first direction and support the unit cells;
a pair of side plates that support the unit cells at both end portions of a second direction crossing the first direction and include a flange portion curved and extended in the second direction; and
a side insulation disposed between the unit cells and the side plates,
wherein the side insulation includes a first insulating portion disposed between the flange portion and the unit cells.

2. The rechargeable battery module as claimed in claim 1, wherein
the flange portion covers the unit cells in a third direction crossing the first direction and the second direction, and
the first insulating portion is disposed between the flange portion and the unit cells in the third direction.

3. The rechargeable battery module as claimed in claim 2, wherein
the first insulating portion includes a plurality of first through-holes exposing the flange portion in the third direction.

4. The rechargeable battery module as claimed in claim 3, wherein
each of the first through-holes corresponds to each of the unit cells.

5. The rechargeable battery module as claimed in claim 3 or claim 4, wherein
the first insulating portion further includes a folding portion that is folded from an end portion of the second direction to cover the first through-holes in the third direction.

6. The rechargeable battery module as claimed in claim 5, wherein
the folding portion is disposed between the first through-holes and the unit cells.

7. The rechargeable battery module as claimed in claim 5 or claim 6, wherein
the first insulating portion further comprises a first tape disposed between the folding portion and the first through-holes.

8. The rechargeable battery module as claimed in claim 7, wherein
the first through-holes are disposed to be spaced apart from each other in the first direction, and
the first tape extends in the first direction and is adhered to the flange portion through the first through-holes.

9. The rechargeable battery module as claimed in claim 7 or claim 8, wherein
the first tape adheres the folding portion and the flange portion through the first through-holes.

10. The rechargeable battery module as claimed in any one of claims 2 to 9, wherein
one of the side plates further comprises a side wall portion that is curved and extended in the third direction from the flange portion to cover the unit cells in the second direction.

11. The rechargeable battery module as claimed in claim 10, wherein
the side wall portion comprises a plurality of second through-holes, and
the plurality of second through-holes expose the side insulation.

12. The rechargeable battery module as claimed in claim 10 or claim 11, wherein
the side insulation further comprises a second insulating portion that is curved and extended in the third direction from the first insulating portion to be disposed between the unit cells and the side wall portion.

13. The rechargeable battery module as claimed in claim 11, wherein
the second insulating portion comprises a second tape disposed between the second insulating portion and the side wall portion, optionally wherein:
the second tape adheres an end portion of the third direction of the second insulating portion and the side wall portion.

14. The rechargeable battery module as claimed in any one of claims 1 to 13, further comprising
a top cover connected to the end plates and the side plates to cover the unit cells in a third direction crossing the first direction and the second direction.

15. The rechargeable battery module as claimed in claim 14, further comprising
a bus bar disposed between the unit cells and the top cover and connected to terminals of the unit cells, optionally wherein:
the rechargeable battery module further comprises a controller disposed between the top cover and the bus bar and connected to the bus bar.
